# FASCICULE DE BREVET EUROPEEN

(11) **EP 1 494 383 B1**
(45) Date de publication et mention de la délivrance du brevet: **19.04.2006**
(21) Numéro de dépôt: 04291369.9
(22) Date de dépôt: 01.06.2004
(51) Int. Cl.: H04J 14/02

(54) **Réseau optique en anneau à multiplexage de longueurs d'onde et à transmission de signaux protégée par commutation locale d'état consécutif à une détection locale d'interruption**
Optisches WDM Ringnetzwerk zur durch lokale Zustandsschaltung gesicherten Signalübertragung bei Erfassung einer lokalen Unterbrechung
WDM optical ring network for signal transmission protected by local state switching caused by local detection of interrutpion

(30) Priorité: 30.06.2003 FR 0307883
(43) Date de publication de la demande: 05.01.2005
(73) Titulaire: ALCATEL, 75008 Paris (FR)
(72) Inventeur: Lovisa, Stéphane, 75017 Paris (FR); Tassara, Fabio, 20137 Milano (IT); Schiavoni, Francesco, 91120 Palaiseau (FR)
(74) Mandataire: Sciaux, Edmond

(56) Documents cités:
- US-A1- 2001 028 757
- US-B1- 6 198 721
- US-B1- 6 243 512
- US-B1- 6 414 765
- CADEDDU R ET AL: "An Optical Bidirectional Self-healing Ring With Increased Capacity Using WDM" 22ND EUROPEAN CONFERENCE ON OPTICAL COMMUNICATION, ECOC'96, vol. 3, 15 septembre 1996 (1996-09-15), pages 257-260, XP010303108

## Description

L'invention concerne le domaine des réseaux de communications optiques en anneau, à multiplexage de longueurs d'onde (ou WDM pour « Wavelength Division Multiplexing »), et plus particulièrement la protection de la transmission de signaux au sein de tels réseaux en cas d'interruption de transmission.

Afin de permettre la poursuite de la transmission de signaux dans un réseau optique en anneau en cas de problème survenu sur les fibres optiques de transmission ou sur un élément impliqué dans la transmission, plusieurs solutions ont été proposées.

Une première solution, appelée « 1+1 O-SNCP », a été développée pour les réseaux de type WDM. Elle consiste à prévoir des première et seconde paires de fibres optiques monodirectionnelles et à transmettre les mêmes signaux multiplexés, dans la première paire de fibres et dans la seconde paire de fibres, dans des directions opposées (dites « est » et « ouest »). Les équipements de réseau, qui sont placés aux extrémités de connexions définies par les première et seconde paires de fibres optiques, ne se préoccupent que des signaux qui leur parviennent de l'une des deux directions, par exemple la direction est. Lorsque l'un de ces équipements détecte une interruption de transmission de signal dans la direction est, il change alors de direction et ne se préoccupe plus que des signaux qui proviennent de la direction ouest.

Une telle solution offre une grande sécurité, mais elle est particulièrement chère du fait qu'elle impose de doubler le nombre de transpondeurs dans chaque équipement de réseau et qu'elle utilise au moins deux fois plus de bande passante.

Une seconde solution, appelée anneau à protection partagée (ou SPRing pour « Shared Protection Ring »), a été développée pour les réseaux de type SDH. Une version appelée MS-SPRing (pour « Multiplex Section SPRing »), dédiée à la transmission de signaux multiplexés, est définie par le standard G.841 ITU-T. Elle consiste à raccorder les équipements de réseau deux à deux à l'aide de deux fibres optiques monodirectionnelles dédiées au transport de signaux multiplexés dans le temps. En fonctionnement normal les signaux circulent dans les fibres optiques en présentant une première longueur d'onde. Lorsque l'un des équipements détecte une interruption de transmission de signal dans les portions de fibres optiques auxquelles il est raccordé, il intègre, dans l'entête des signaux (ou messages) SDH qui contiennent les données, des octets d'avertissement, conformément au protocole dit « K-byte ». Ces octets sont destinés à demander à l'équipement, placé à l'extrémité opposée de la connexion, de transmettre ses signaux sur les fibres optiques, dans une direction opposée à la précédente, en reconfigurant ses transpondeurs.

Un tel mode de fonctionnement est difficilement applicable aux réseaux de type WDM, et plus particulièrement aux réseaux métropolitains WDM dans lesquels des signaux de types différents coexistent et ne disposent pas toujours d'un entête. Certes, il serait possible d'utiliser un canal de transmission spécifique, appelé OSC (pour « Opticat Supervisory Channel »), pour permettre aux équipements de s'échanger des trames, équivalentes aux entêtes SDH (32 octets), comportant des messages d'avertissement. Mais, cela monopoliserait des ressources de transmission du réseau et imposerait de développer de nouveaux transpondeurs, ce qui requerrait des développements longs et onéreux.

En outre, cette seconde solution met en oeuvre un mécanisme de protection assez lent puisqu'il nécessite la remontée d'informations d'une extrémité à l'autre de chaque connexion défaillante.

Le document US 6,414,765 décrit un système de protection de réseau de communications en anneau à multiplexage de longueur d'ondes tel que dans le preambule de la revendication 1.

Aucune solution connue n'apportant une entière satisfaction, l'invention a donc pour but d'améliorer la situation.

Elle propose à cet effet un équipement de réseau de communications en anneau à multiplexage de longueurs d'onde, comprenant :
- un premier multiplexeur, raccordé à une première portion de fibre optique du réseau, cette fibre étant dédiée au transport de signaux multiplexés,
- un second multiplexeur, raccordé à une seconde portion de fibre optique, et
- des moyens de protection de signaux raccordés aux premier et second multiplexeurs ainsi qu'à un terminal, et chargés, lorsqu'ils détectent localement une interruption de transmission de signal, présentant une première longueur d'onde, sur la première portion de fibre optique, de transmettre soit au second multiplexeur, selon une seconde longueur d'onde, les signaux provenant du terminal de sorte qu'il les communique à la seconde portion de fibre optique (dans une direction opposée à la direction habituelle), soit au terminal les signaux qui lui sont destinés et qui proviennent de la seconde portion de fibre optique en présentant la seconde longueur d'onde.

Selon l'invention, les moyens de protection de signaux comportent d'une première part, des moyens de répartition de signaux raccordés au terminal, d'une deuxième part, des premiers et seconds moyens d'action raccordés aux moyens de répartition de signaux et respectivement aux premier et second multiplexeurs, et agencés de manière à se placer soit dans un premier état dédié au transit de signal présentant la seconde longueur d'onde, soit dans un second état dédié à l'insertion/extraction de signal présentant la seconde longueur d'onde, en fonction d'instructions d'état locales, ces moyens d'action étant placés par défaut dans leur premier état de transit, et d'une troisième part, des premiers moyens d'insertion/extraction de signal raccordés aux moyens de répartition de signaux, au premier multiplexeur et aux premiers et seconds moyens d'action, et chargés, lorsqu'ils détectent localement une interruption, d'adresser aux premiers et seconds moyens d'action des instructions d'état locales de sorte qu'ils se placent dans ledit second état d'insertion/extraction.

Ainsi, lorsque l'équipement se trouve sur le trajet de signaux circulant dans le fibre optique selon la seconde longueur d'onde, mais qu'il n'est pas placé à l'extrémité d'une portion de fibres optiques concernée par une interruption de transmission, il n'y a pas à les reconfigurer. Les premiers et seconds moyens d'action procèdent alors automatiquement au transit des signaux qu'ils reçoivent de la fibre optique, selon la seconde longueur d'onde, avant de les réinjecter dans celles-ci, toujours selon la seconde longueur d'onde, en direction de l'équipement suivant.

L'avantage de cette disposition est qu'aucun message d'avertissement, sous quelque forme que ce soit, n'a besoin d'être échangé entre les différents équipements du réseau. La reconfiguration s'effectue donc localement et sans intervention externe, là où elle est nécessaire.

Par ailleurs, les moyens de protection de signaux peuvent également comprendre des troisièmes moyens de couplage raccordant lesdits moyens de répartition auxdits premiers moyens d'insertion/extraction et auxdits premiers et seconds moyens d'action, pour l'échange de signaux entre ledit terminal et lesdites portions de fibre optique via respectivement lesdits premier et second multiplexeurs.

Lorsque l'équipement est connecté non pas à un seul autre équipement, mais à deux par l'intermédiaire des première et seconde portions de fibre optique, via respectivement ses premier et second multiplexeurs, ses moyens de protection de signaux sont préférentiellement chargés, lorsqu'ils détectent localement une interruption de transmission de signal, présentant une troisième longueur d'onde (éventuellement identique à la première), sur la seconde portion de fibre optique, de transmettre soit au premier multiplexeur, selon une quatrième longueur (éventuellement identique à la seconde), les signaux provenant du terminal afin qu'il les communique à la première portion de fibre optique (dans une direction opposée à la direction habituelle), soit de transmettre au terminal les signaux qui lui sont destinés et qui proviennent de la première portion de fibre optique en présentant la seconde longueur d'onde.

Dans cette situation, les moyens de protection de signaux peuvent comprendre des seconds moyens d'insertion/extraction de signaux présentant la troisième longueur d'onde, raccordés aux moyens de répartition de signaux, au second multiplexeur et aux premiers et seconds moyens d'action, et agencés, lorsqu'ils détectent localement une interruption de signal présentant la troisième longueur d'onde, d'adresser aux premiers et seconds moyens d'action des instructions d'état locales afin qu'ils changent d'état, c'est-à-dire de sorte qu'ils se placent dans ledit second état d'insertion/extraction. Les moyens de protection de signaux peuvent alors également comprendre des quatrièmes moyens de couplage raccordant les seconds moyens d'insertion/extraction de signaux aux premiers et seconds moyens d'action, afin de leur transmettre sélectivement les instructions d'état locales.

L'invention est particulièrement bien adaptée, bien que de façon non limitative, aux réseaux WDM métropolitains en anneau.

D'autres caractéristiques et avantages de l'invention apparaîtront à l'examen de la description détaillée ci-après, et des dessins annexés, sur lesquels :
- la figure 1 illustre de façon très schématique un exemple de réseau WDM en anneau, en fonctionnement normal,
- la figure 2 illustre de façon schématique un exemple de réalisation d'un équipement de réseau selon l'invention, en fonctionnement normal,
- la figure 3 illustre le fonctionnement du réseau WDM en anneau de la figure 1, en cas de rupture d'une portion de fibres optiques entre deux équipements de réseau,
- la figure 4 illustre le fonctionnement de l'équipement de réseau de la figure 2, en cas de rupture de la portion de fibres optiques située à sa droite, et
- la figure 5 illustre le fonctionnement de l'équipement de réseau de la figure 2, en cas de rupture de la portion de fibres optiques située à sa gauche.

Les dessins annexés pourront non seulement servir à compléter l'invention, mais aussi contribuer à sa définition, le cas échéant.

L'invention a pour objet de permettre la protection de la transmission de signaux dans des réseaux optiques en anneau, à multiplexage de longueurs d'onde (ou WDM), ci-après appelés « réseaux WDM en anneau ».

Dans ce qui suit, on considère que le réseau WDM en anneau est de type métropolitain. Mais l'invention n'est limitée à ce seul type. Elle concerne également, notamment, les liens dits « Long Haul » présentant une topologie en anneau.

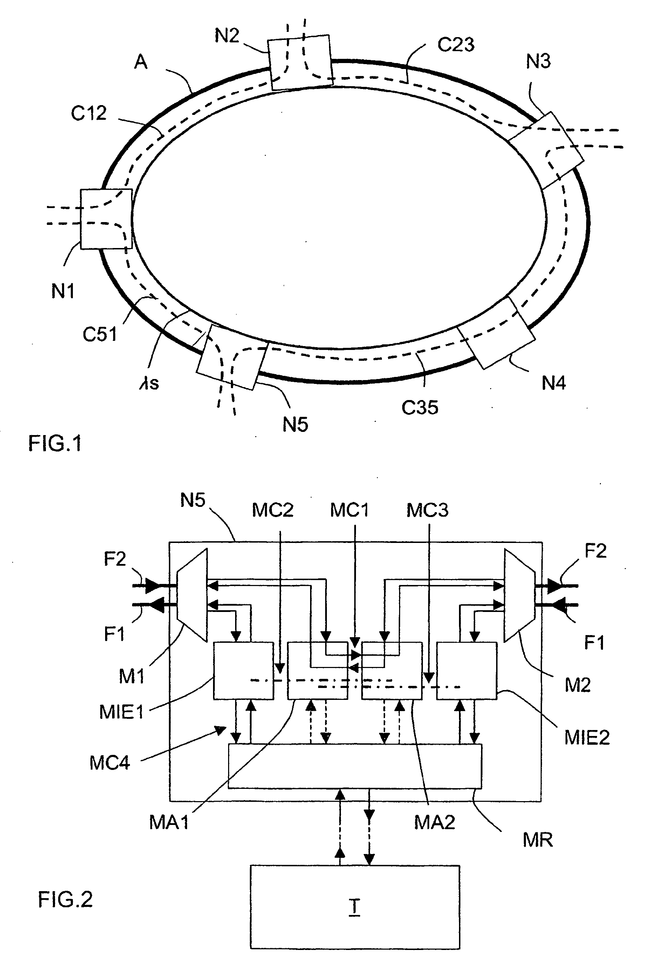

Comme cela est très schématiquement illustré sur la figure 1, un réseau WDM en anneau, comporte, d'une part, une ou plusieurs fibres optiques, ici matérialisées par un anneau A, et dédiées à la transmission de multiplex de signaux dans des directions opposées, et d'autre part, des équipements de réseau ou (stations) Ni (ici i = 1 à 5), raccordé(e)s aux fibres optiques.

Chaque équipement de réseau Ni sert d'interface entre le réseau WDM en anneau et un terminal de communication T (voir figure 2), servant éventuellement de point d'entrée (ou serveur d'accès) à un autre réseau ou sous-réseau (optique ou non).

Au sein d'un réseau WDM en anneau, des équipements de réseau Ni ne peuvent échanger des données (sous la forme de signaux optiques) qu'une fois qu'ils ont établi entre eux des connexions via la ou les fibres optiques. Dans l'exemple illustré sur la figure 1, quatre équipements N1, N2, N3 et N5 ont ainsi établi, deux à deux via des portions de fibre , des connexions référencées respectivement C12, C23, C35 et C51, qui leur permettent de s'échanger des signaux optiques selon au moins une première longueur d'onde *λ*w qu'on peut qualifier "de travail".

Par exemple, dans le cas où l'anneau comporte deux fibres F1, F2, l'équipement N1 transmet des signaux présentant la première longueur d'onde *λ*w à l'équipement N5 en utilisant la seconde fibre F2 (ici dédiée à la direction de transmission dans le sens inverse des aiguilles d'une montre, dite « direction est »), tandis que l'équipement N5 transmet des signaux présentant également la première longueur d'onde *λ*w à l'équipement N1 en utilisant la première fibre F1 (ici dédiée à la direction de transmission dans le sens des aiguilles d'une montre, dite « direction ouest »).

Il est important de noter qu'un équipement Ni peut être connecté à plusieurs équipements avec lesquels il échange des signaux présentant des longueurs d'onde éventuellement différentes. Bien entendu, le cas le plus simple serait celui où la même longueur d'onde *λ*w est utilisée et où une fibre unique sert aux transmissions dans les deux directions.

Comme cela est illustré sur la figure 2, un équipement selon l'invention (par exemple N5, dans le cas où l'anneau comporte deux fibres F1, F2) comporte un premier multiplexeur M1, raccordé à des premières portions des fibres optiques F1 et F2 (qui correspondent ici à la connexion C51), ainsi qu'un second multiplexeur M2, raccordé à des secondes portions des fibres optiques F1 et F2 (qui correspondent ici à la connexion C35).

Dans l'exemple illustré, l'équipement N5 étant connecté à deux autres équipements N1 et N3, chacun de ses multiplexeurs M1 et M2 est couplé à un module d'insertion/extraction de signaux MIE1, MIE2. Le terme "multiplexeur" employé ici doit être compris comme désignant un dispositif apte à combiner plusieurs signaux optiques issus de l'équipement et à séparer plusieurs signaux optiques, portés par des longueurs d'onde différentes, issus des fibres. Il peut donc s'agir de composants multiplexeurs/démultiplexeurs, mais aussi de montages constitués de simples coupleurs (pour combiner) et de filtres (pour séparer).

Chaque module d'insertion/extraction de signaux MIE1, MIE2 est par exemple réalisé sous la forme d'une carte électronique, de type transpondeur, agencée de manière à alimenter, d'une part, le multiplexeur M1, M2 auquel il est raccordé en signaux présentant la première longueur d'onde *λ*w et provenant du terminal T, afin qu'ils soient insérés (ou « added ») dans un multiptex, et d'autre part, le terminal T auquel leur équipement N5 est raccordé en signaux présentant la première longueur d'onde *λ*w, extraits (ou « dropped ») du multiplexeur M1, M2 auquel il est raccordé.

Bien entendu, lorsqu'un équipement Ni n'a établi qu'une unique connexion avec un autre équipement Nj, il n'utilise qu'un seul module d'insertion/extraction MIE raccordé au multiplexeur M qui est couplé aux portions de fibres optiques raccordées à cet autre équipement Nj.

Chaque équipement selon l'invention Ni comporte également des premier MA1 et second MA2 modules d'action chargés d'assurer une fonction de transit de signaux selon une seconde longueur d'onde *λ*s, et une fonction d'insertion/extraction de signaux selon la seconde longueur d'onde *λ*s, selon l'état dans lequel ils sont placés. Cette seconde longueur d'onde *λ*s constitue alors une longueur d'onde de secours.

Chaque module d'action MA1, MA2 est par exemple réalisé sous la forme d'une carte électronique, de type transpondeur, couplée au premier M1 ou second M2 multiplexeur, et agencée de manière à, d'une part, l'alimenter en signaux présentant la seconde longueur d'onde *λ*s et provenant du terminal T, et d'autre part, en extraire les signaux présentant la seconde longueur d'onde λs et destinés au terminal T.

Par ailleurs, les modules d'action MA1 et MA2 sont raccordés l'un à l'autre par des moyens de couplage MC1 de manière à assurer leur première fonction dite de transit de signal selon la seconde longueur d'onde *λ*s. Cette première fonction peut consister en une fonction de régénération, avec ou sans passage par le domaine électrique. Le cas particulier de la fonction de transit par régénération avec passage par le domaine électrique sera considéré dans la suite à titre d'exemple de réalisation. Les moyens de couplage MC1 seront alors essentiellement des moyens de connexion électriques.

Chaque module d'insertion/extraction MIE1, MIE2 est en outre raccordé par des moyens de connexion MC2, MC3 aux deux modules d'action MA1 et MA2 afin de leur adresser des instructions de changement d'état local, comme on le verra plus loin.

Ces moyens de connexion MC1, MC2 et MC3 sont préférentiellement réalisés dans ce que l'homme de l'art appelle le « fond de panier » (ou « back panel ») de l'équipement Ni.

Enfin, chaque équipement Ni comporte également un module de répartition de signaux MR raccordé, d'une part, au terminal T, et d'autre part, par des moyens de couplage MC4, aux modules d'insertion/extraction MIE1 et MIE2 et aux modules d'action MA1 et MA2.

Ce module de répartition MR est chargé d'alimenter les modules d'insertion/extraction MIE1 et MIE2 et les modules d'action MA1 et MA2 en signaux provenant du terminal T, selon leur destination, et de collecter les signaux extraits par les modules d'insertion/extraction MIE1 et MIE2 et les modules d'action MA1 et MA2, au niveau de leurs multiplexeurs respectifs M1 et M2, et destinés au terminal T.

Comme indiqué précédemment, l'invention a pour objet de permettre la protection de la transmission des signaux au sein du réseau WDM en anneau.

A cet effet, chaque module d'insertion/extraction MIE1, MIE2 est chargé d'observer le trafic des premières ou secondes portions de fibres optiques F1 et F2 auxquelles son multiplexeur M1 ou M2 est raccordé. En d'autres termes, dans l'exemple illustré, le module d'insertion/extraction MIE1 de l'équipement N5 est chargé d'observer le trafic sur la connexion C51, tandis que le module d'insertion/extraction MIE2 de l'équipement N5 est chargé d'observer le trafic sur la connexion C35.

Si le trafic observé par les modules d'insertion/extraction MIE1 et MIE2 est normal, alors les modules d'action MA1 et MA2 sont tous les deux placés dans leur premier état de transit, comme illustré sur la figure 2. Ce premier état de transit est l'état par défaut des modules d'action de tous les équipements Ni du réseau WDM en anneau, pour des raisons qui seront exposées plus loin.

Dans ce premier état, les modules d'action MA1 et MA2 sont couplés l'un à l'autre par les moyens de couplage MC1.

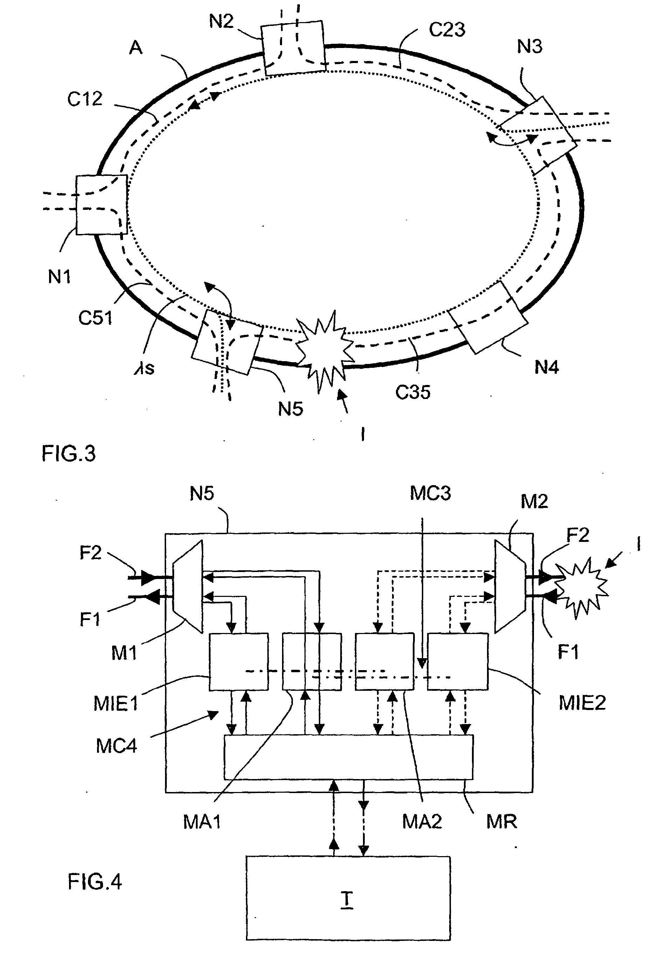

En revanche, si l'un des modules d'insertion/extraction; par exemple MIE2, détecte une interruption de la transmission des signaux sur la connexion C35 (secondes portions des fibres optiques F1 et F2), comme illustré sur la figure 3 par la référence 1, alors il adresse aux deux modules d'action MA1 et MA2, à l'aide des moyens de couplage MC3, des instructions locales leur ordonnant de changer d'état, c'est-à-dire de passer de leur premier état de transit à leur second état d'insertion/extraction.

Le second module d'insertion/extraction MIE2 ne pouvant plus assurer sa fonction d'insertion/extraction, il se trouve alors, en quelque sorte, dans un état de veille dans lequel il ne fait plus qu'observer le trafic sur les secondes portions de fibres optiques F1 et F2. En revanche, le premier module d'insertion/extraction MIE1 peut continuer à assurer sa fonction d'insertion/extraction puisque le trafic n'est pas interrompu sur les premières portions de fibres optiques F1 et F2 auxquelles son premier multiplexeur est raccordé.

Comme cela est illustré sur la figure 4, seul l'un des deux modules d'action (ici MA1) est alors apte à échanger des signaux avec le premier multiplexeur M1, étant donné que l'autre module d'action (ici MA2) est couplé au second multiplexeur M2 qui ne peut plus émettre ou recevoir de signaux du fait de l'interruption de la seconde portion de fibres optiques F1 et F2.

Le premier module d'action MA1 est alors prêt à assurer sa seconde fonction d'insertion/extraction, à l'image du premier module d'insertion extraction MIE1. Mais, à la différence du premier module d'insertion/extraction MIE1 qui est notamment chargé d'alimenter le premier multiplexeur M1 en signaux, qu'il reçoit du module de répartition MR et qui proviennent du terminal T, présentant la première longueur d'onde *λ*w, le premier module d'action MA1 est chargé d'alimenter le premier multiplexeur M1 en signaux, qu'il reçoit du module de répartition MR et qui proviennent du terminal T, et présentant la seconde longueur d'onde *λ*s.

Les signaux, provenant du terminal T et destinés (ici) à l'équipement N3, parviennent donc au module de répartition MR qui les transmet au premier module d'action MA1, lequel les transmet au premier multiplexeur M1 selon la seconde longueur d'onde *λ*s. Le premier multiplexeur M1 intègre alors ces signaux dans un multiplex qu'il injecte dans la fibre F1 en direction de l'équipement N1.

Cet équipement N1 n'étant pas raccordé à une portion de fibres optiques F1, F2 interrompue, il demeure dans son état par défaut (illustré sur la figure 2). En d'autres termes, ses deux modules d'action MA1 et MA2 demeurent placés dans leur premier état de transit, de sorte qu'à réception des signaux selon la seconde longueur d'onde λs, destinés à l'équipement N3, ils les régénèrent, puis les transmettent à leur premier multiplexeur M1 de sorte qu'il les injecte, toujours selon la seconde longueur d'onde *λ*s, dans la portion de la fibre optique F1 à laquelle il est raccordé, à destination de l'équipement suivant N2.

Tout comme l'équipement N1, l'équipement N2 n'étant pas raccordé à une portion de fibres optiques F1, F2 interrompue, il demeure dans son état par défaut (illustré sur la figure 2). Il régénère donc, avec ses deux modules d'action MA1 et MA2, les signaux reçus de l'équipement N1 selon la seconde longueur d'onde *λ*s, puis les injecte, toujours selon la seconde longueur d'onde *λ*s, dans la portion de la fibre optique F1 à laquelle il est raccordé, à destination de l'équipement suivant N3.

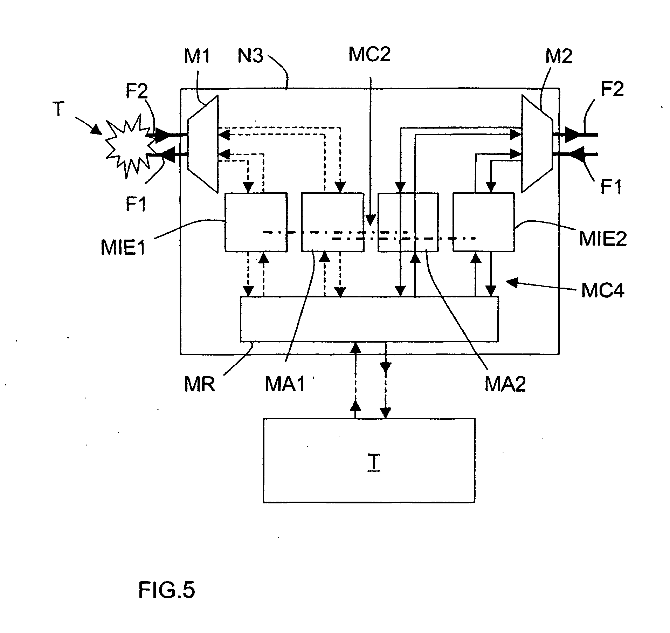

L'équipement suivant N3 est en revanche, ici, raccordé à une (première) portion de fibres optiques F1, F2 interrompue. Il a donc, comme l'équipement N5 changé d'état dès que son premier module d'insertion/extraction MIE1 a détecté l'interruption de transmission sur la connexion C35 (qui constitue pour lui des premières portions de fibres optiques F1, F2). Cet état est illustré sur la figure 5.

Plus précisément, lorsque son premier module d'insertion/extraction MIE1 a détecté l'interruption de la transmission des signaux sur la connexion C35, il a adressé aux deux modules d'action MA1 et MA2, à l'aide des moyens de couplage MC2, des instructions locales leur ordonnant de changer d'état, c'est-à-dire de passer de leur premier état de transit à leur second état d'insertion/extraction.

Le second module d'action MA2 est alors seul devenu apte à échanger des signaux avec le second multiplexeur M2, le premier module d'action MA1 étant couplé au premier multiplexeur M1 qui ne peut plus émettre ou recevoir de signaux du fait de l'interruption des premières portions de fibres optiques F1 ou F2.

Lorsqu'il reçoit les signaux selon la seconde longueur d'onde As de l'équipement N2, le second module d'action MA2 est prêt à assurer sa seconde fonction d'insertion/extraction, à l'image du second module d'insertion extraction MIE2. Mais, à la différence du second module d'insertion/extraction MIE2 qui est chargé d'extraire du second multiplexeur M2 les signaux présentant la première longueur d'onde *λ*w, le second module d'action MA2 est chargé d'extraire du second multiplexeur M2 les signaux présentant la seconde longueur d'onde As de manière à les transmettre au module de répartition MR, qui les communique ensuite au terminal T. Bien entendu, le second module d'action MA2 est également chargé d'alimenter le second multiplexeur M2 en signaux selon la seconde longueur d'onde *λ*s, provenant du terminal T auquel est raccordé l'équipement N3 et destinés à l'équipement N5.

En fonctionnement normal, c'est-à-dire en l'absence d'interruption I, les signaux, provenant du terminal T couplé à l'équipement N5 et destinés (ici) à l'équipement N3, seraient parvenus au module de répartition MR qui les aurait transmis au second module d'insertion/extraction MIE2, lequel les aurait transmis au second multiplexeur M2 selon la première longueur d'onde *λ*w. Le second multiplexeur M2 aurait alors intégré ces signaux dans un multiplex qu'il aurait ensuite injecté dans la seconde portion de la fibre F2, c'est-à-dire dans une direction opposée à celle utilisée en mode protégé. Les signaux ainsi injectés seraient alors parvenus à l'équipement destinataire N3, ici via l'équipement de transit N4, en empruntant la connexion C35.

La seconde longueur d'onde *λ*s sert donc de longueur d'onde de protection pour la première longueur d'onde *λ*w.

Ainsi, grâce à l'invention, seuls les deux équipements placés aux deux extrémités d'une connexion défaillante, c'est-à-dire placés aux deux extrémités opposées de portions de fibres optiques, objet d'une interruption de transmission, doivent modifier localement leur état de fonctionnement, après avoir eux-mêmes détectés localement ladite interruption. Les autres équipements, qui se trouvent sur le trajet des signaux échangés par les deux équipements concernés par l'interruption, étant par défaut placés dans leur état de transit, ils peuvent donc régénérer les signaux qu'ils reçoivent puis les relayer vers l'équipement suivant. En d'autres termes, aucun message d'avertissement, sous quelque forme que ce soit, n'a besoin d'être échangé entre les différents équipements. La reconfiguration s'effectue donc localement et sans intervention externe, là où elle est nécessaire. Il en résulte une rapidité optimale de mise en place de la protection.

Lorsqu'un module d'insertion/extraction MIE1 ou MIE2 détecte de nouveau du trafic sur la connexion qu'il observe, il adresse aux deux modules d'action MA1 et MA2, à l'aide des moyens de couplage MC2 ou MC3, des instructions locales leur ordonnant de changer d'état, c'est-à-dire de passer de leur second état d'insertion/extraction à leur premier état de transit (illustré sur la figure 2). Les deux modules d'action MA1 et MA2 sont alors de nouveau aptes à régénérer conjointement les signaux, selon la seconde longueur d'onde *λ*s, provenant des fibres F1 et F2, et les deux modules d'insertion/extraction MIE1 et MIE2 sont de nouveau tous les deux prêts à remplir leur fonction d'insertion/extraction de signaux selon la première longueur d'onde *λ*w.

Comme indiqué précédemment, un équipement peut être connecté à des équipements avec lesquels il échange des signaux selon des longueurs d'onde différentes. Par exemple, un équipement peut être raccordé par les premières portions de fibres optiques à un autre équipement de manière à échanger avec celui-ci des signaux selon une première longueur d'onde, et par les secondes portions de fibres optiques à encore un autre équipement de manière à échanger avec celui-ci des signaux selon une troisième longueur d'onde. En variante, un équipement peut être raccordé par les premières (ou secondes) portions de fibres optiques à deux autres équipements de manière à échanger avec eux des signaux selon respectivement des première et troisième longueurs d'onde. Dans ces situations, chaque module d'insertion/extraction MIE est agencé en conséquence en fonction de la longueur d'onde qu'il doit gérer.

Par ailleurs les longueurs d'onde de travail et de secours impliquées peuvent prendre des valeurs toutes différentes ou non, mais dans ce dernier cas il faut les choisir de sorte que des signaux différents ne se propagent jamais simultanément dans un même milieu, dans la même direction et avec la même longueur d'onde.

Les modules d'insertion/extraction MIE, de répartition MR et d'action MA de l'équipement de réseau N, selon l'invention, peuvent être réalisés par des moyens classiques : circuits électroniques, circuits optiques ou optoélectroniques, modules logiciels (ou informatiques), ou une combinaison de circuits et de logiciels.

L'invention offre également un procédé de transmission de signaux au sein d'un réseau WDM en anneau, comprenant des équipements de réseau Ni raccordés deux à deux par des extrémités opposées de fibres optiques F1 et F2, dédiées au transport de signaux multiplexés dans des directions opposées.

Celui-ci peut être notamment mis en oeuvre à l'aide de l'équipement de réseau N présenté ci-avant. Les fonctions et sous-fonctions principales et optionnelles assurées par les étapes de ce procédé étant sensiblement identiques à celles assurées par les différents moyens constituant cet équipement de réseau N, seules seront résumées ci-après les étapes mettant en oeuvre les fonctions principales du procédé.

Ce procédé consiste, lorsqu'un équipement de réseau Ni détecte une interruption de transmission de signal, présentant une première longueur d'onde *λ*w, sur une première portion de fibres optiques F1 et F2 auxquelles il est raccordé, à transmettre à une seconde portion de ces fibres optiques F1 et F2, opposées à la première portion, selon une seconde longueur d'onde *λ*s, les signaux qu'il reçoit d'un terminal T, et à transmettre au terminal T les signaux qui lui sont destinés et qui proviennent de la seconde portion de fibres optiques en présentant la seconde longueur d'onde *λ*s.

Les équipements de réseau Ni sont par ailleurs placés par défaut dans un premier état de transit de signal afin de permettre la circulation des signaux présentant la seconde longueur d'onde *λ*s dans les fibres optiques F1 et F2.

L'invention ne se limite pas aux modes de réalisation d'équipement de réseau et de réseau WDM en anneau décrits ci-avant, seulement à titre d'exemple, mais elle englobe toutes les variantes que pourra envisager l'homme de l'art dans le cadre des revendications ci-après.

## Revendications

1. Equipement (Ni) de réseau de communications en anneau à multiplexage de longueurs d'onde, comprenant un premier multiplexeur (M1), apte à être raccordé à une première portion de fibre optique (F1, F2) dédiée au transport de signaux multiplexés, et un second multiplexeur (M2), apte à être raccordé à une seconde portion de fibre optique (F1, F2), ledit équipement comprenant des moyens de protection de signaux (MiE1,MiE2,MR,MA1,MA2) raccordés auxdits premier (M1) et second (M2) multiplexeurs et aptes à être raccordés à un terminal (T), et agencés, en cas de détection locale d'une interruption de transmission de signal, présentant une première longueur d'onde (*λ*w), sur ladite première portion de fibre optique (F1, F2), pour transmettre audit second multiplexeur (M2), selon une seconde longueur d'onde (*λ*s), les signaux provenant dudit terminal (T), de sorte qu'il les communique à ladite seconde portion de fibre optique, et pour transmettre audit terminal (T) les signaux qui lui sont destinés et qui proviennent de ladite seconde portion de fibre optique (F1, F2) en présentant ladite seconde longueur d'onde (*λ*s), **caractérisé en ce que** lesdits moyens de protection de signaux (MIE, MR, MA1, MA2) comprennent :
- des moyens de répartition de signaux (MR) aptes à être raccordés audit terminal (T),
- des premiers (MA1) et seconds (MA2) moyens d'action raccordés auxdits moyens de répartition de signaux (MR) et respectivement aux premier (M1) et second (M2) multiplexeurs, et agencés de manière à se placer dans un premier état de transit ou un second état d'insertion/extraction de signaux présentant ladite seconde longueur d'onde (*λ*s) en fonction d'instructions d'état locales, lesdits moyens d'action étant placés par défaut dans leur premier état de transit,
- des premiers moyens d'insertion/extraction (MIE1) de signaux présentant la première longueur d'onde (λw), raccordés auxdits moyens de répartition de signaux (MR), audit premier multiplexeur (M1) et auxdits premiers (MA1) et seconds (MA2) moyens d'action, et agencés en cas de détection locale d'une interruption de signal pour adresser auxdits premiers (MA1) et seconds (MA2) moyens d'action des instructions d'état locales de sorte qu'ils se placent dans ledit second état d'insertion/extraction.

2. Equipement selon la revendication 1, **caractérisé en ce que** lesdits moyens de protection de signaux (MIE, MR, MA1, MA2) comprennent :
- des premiers moyens de couplage (MC2) raccordant lesdits premiers moyens d'insertion/extraction de signaux (MIE1) auxdits premiers (MA1) et seconds (MA2) moyens d'action, de manière à leur transmettre sélectivement lesdites instructions d'état locales,
- des seconds moyens de couplage (MC1) raccordant lesdits premiers (MA1) et seconds (MA2) moyens d'action entre eux, de sorte qu'ils puissent se communiquer des signaux à régénérer, et
- des troisièmes moyens de couplage (MC4) raccordant lesdits moyens de répartition (MR) auxdits premiers moyens d'insertion/extraction (MIE1) et auxdits premiers (MA1) et seconds (MA2) moyens d'action, pour l'échange de signaux entre ledit terminal (T) et lesdites portions de fibre optique (F1, F2) via respectivement lesdits premier (M1) et second (M2) multiplexeurs.

3. Equipement selon l'une des revendications 1 ou 2, **caractérisé en ce que** lesdits moyens de protection de signaux (MIE, MR, MA1, MA2) sont agencés, en cas de détection locale d'une interruption de transmission de signal, présentant une troisième longueur d'onde, sur ladite seconde portion des fibre optique (F1, F2), pour transmettre au premier multiplexeur (M1), selon une quatrième longueur d'onde, les signaux provenant dudit terminal (T), de sorte qu'il les communique à ladite première portion de fibre optique (F1, F2), et pour transmettre audit terminal (T) les signaux qui lui sont destinés et qui proviennent de ladite première portion de fibre optique (F1, F2) en présentant ladite seconde longueur d'onde (*λ*s).

4. Equipement selon la revendication 3, **caractérisé en ce que** lesdits moyens de protection de signaux (MIE, MR, MA1, MA2) comprennent des seconds moyens d'insertion/extraction de signaux (MIE2) présentant la troisième longueur d'onde, raccordés auxdits moyens de répartition de signaux (MR), audit second multiplexeur (M2) et auxdits premiers (MA1) et seconds (MA2) moyens d'action, et agencés en cas de détection locale d'une interruption de transmission de signal, présentant la troisième longueur d'onde, pour adresser auxdits premiers (MA1) et seconds (MA2) moyens d'action des instructions d'état locales de sorte qu'ils se placent dans ledit second état d'insertion/extraction.

5. Equipement selon la revendication 4, **caractérisé en ce que** lesdits moyens de protection de signaux (MIE, MR, MA1, MA2) comprennent des quatrièmes moyens de couplage (MC3) raccordant lesdits seconds moyens d'insertion/extraction de signaux (MIE2) auxdits premiers (MA1) et seconds (MA2) moyens d'action, de manière à leur transmettre sélectivement lesdites instructions d'état locales.

6. Equipement selon l'une des revendications 3 à 5, **caractérisé en ce que** ladite troisième longueur d'onde est identique à ladite première longueur d'onde (*λ*w).

## Claims

1. Wavelength division multiplex ring communication network equipment (Ni) comprising a first multiplexer (M1) adapted to be connected to a first optical fibre portion (F1, F2) dedicated to transporting multiplexed signals and a second multiplexer (M2) adapted to be connected to a second optical fibre portion (F1, F2), said equipment comprising signal protection means (MIE1, MIE2, MR, MA1, MA2) connected to said first (M1) and second (M2) multiplexers and adapted to be connected to a terminal (T) and adapted, in the event of local detection of interruption of signal transmission at a first wavelength (λw) on said first optical fibre portion (F1, F2), to send the signals coming from said terminal (T) to said second multiplexer (M2) at a second wavelength (λs), so that it communicates them to said second optical fibre portion, and to transmit to said terminal (T) the signals that are addressed to it and that come from said second optical fibre portion (F1, F2) at said second wavelength (λs), which equipment is **characterised in that** said signal protection means (MIE, MR, MA1, MA2) comprise:
- signal distribution means (MR) adopted to be connected to said terminal (T),
- first (MA1) and second (MA2) action means connected to said signal distribution means (MR) and to the first (M1) and second (M2) multiplexers, respedively, and adapted to assume a first transit state or a second add/drop state for adding/dropping signals at said second wavelength (*λ*s) as a function of local state instructions, said action means assuming by default their first transit state, and
- first add/drop means (MIE1) for signals at said first wavelength (λw), connected to said signal distribution means (MR), said first multiplexer (M1), and said first (MA1) and second (MA2) action means, and adapted in the event of local detection of signal interruption to send said first (MA1) and second (MA2) action means local state instructions so that they assume said second add/drop state.

2. Equipment according to claim 1, **characterised in that** said signal protection means (MIE, MR, MA1, MA2) comprise:
- first coupling means (MC2) for connecting said first signal add/drop means (MIE1) to said first (MA1) and second (MA2) action means so as to transmit selectively to them said local state instructions,
- second coupling means (MC1) for connecting said first (MA1) and second (MA2) action means to each other so that they are able to communicate to each other signals to be regenerated, and
- third coupling means (MC4) for connecting said distribution means (MR) to said first add/drop means (MIE1) and to said first (MA1) and second (MA2) action means, for the exchange of signals between said terminal (T) and said optical fibre portions (F1, F2) via said first (M1) and second (M2) multiplexers, respectively.

3. Equipment according to claim 1 or claim 2, **characterised in that** said signal protection means (MIE, MR, MA1, MA2) are adapted, in the event of local detection of signal transmission interruption at a third wavelength on said second optical fibres portion (F1, F2), to transmit to the first multiplexer (M1) at a fourth wavelength the signals coming from said terminal (T) so that it communicates them to said first portion of optical fibre (F1, F2), and to transmit to said terminal (T) the signals that ore addressed to it and come from said first portion of optical fibre (F1, F2) at said second wavelength (Xs).

4. Equipment according to claim 3, **characterised in that** said signal protection means (MIE, MR, MA1, MA2) comprise second signal add/drop means (MIE2) for adding/dropping the third wavelength connected to said signal distribution means (MR), to said second multiplexer (M2), and to said first (MA1) and second (MA2) action means and adapted, in the event of local detection of interruption of transmission of a signal at the third wavelength, to send said first (MA1) and second (MA2) action means local state instructions so that they assume said second odd/drop state.

5. Equipment according to claim 4, **characterised in that** said signal protection means (MIE, MR, MA1, MA2) comprise fourth coupling means (MC3) for connecting said second signal add/drop means (MIE2) to said first (MA1) and second (MA2) action means so as to transmit selectively to them said local state instructions.

6. Equipment according to any of claims 3 to 5, **characterised in that** said third wavelength is identical to said first wavelength (λw).

## Patentansprüche

1. WDM-Kommunikationsringnetzwerkausrüstung (Ni), beinhaltend einen ersten Multiplexer (M1), der an einen ersten Teil optischer Faser (F1, F2) angeschlossen werden kann, die dem Transport gemultiplexter Signale gewidmet ist, und einen zweiten Multiplexer (M2), der an einen zweiten Teil optischer Faser (F1, F2) angeschlossen werden kann, wobei diese Ausrüstung Mittel zur Signalsicherung (MIE1, MIE2, MR, MA1, MA2) beinhaltet, die an diesen ersten (M1) und diesen zweiten (M2) Multiplexer angeschlossen sind sowie an ein Terminal (T) angeschlossen werden können und so angelegt sind, dass bei lokaler Erfassung einer Unterbrechung der Übertragung eines Signals auf diesem ersten Teil optischer Faser (F1, F2), das eine erste Wellenlänge (λw) aufweist, die von diesem Terminal (T) kommenden Signale gemäß einer zweiten Wellenlänge (λs) an diesen zweiten Multiplexer (M2) übertragen werden, so dass er sie an diesen zweiten Teil optischer Faser mitteilt, und diesem Terminal (T) die für ihn bestimmten und vom zweiten Teil optischer Faser (F1, F2) kommenden Signale übertragen werden, wobei die zweite Wellenlänge (λs) aufgewiesen wird, **dadurch gekennzeichnet, dass** diese Mittel zur Signalsicherung (MIE, MR, MA1, MA2) Folgendes beinhalten:
- Mittel zur Signalverteilung (MR), die an dieses Terminal (T) angeschlossen werden können,
- erste (MA1) und zweite (MA2) Aktionsmittel, die an diese Mittel zur Signalverteilung (MR) und an den ersten (M1) beziehungsweise zweiten (M2) Multiplexer angeschlossen sind, und so angelegt sind, dass sie sich in einen ersten Durchgangszustand versetzen, oder in einen zweiten Zustand Einsetzen/Herausziehen von Signalen, welche diese zweite Wellenlänge (λs) aufweisen, in Abhängigkeit von lokalen Zustandsanweisungen, wobei diese Aktionsmittel standardmäßig in ihren ersten Durchgangszustand gesetzt sind,
- erste Mittel zum. Einsetzen/Herausziehen (MIE1) von Signalen, welche die erste Wellenlänge (λw) aufweisen, die an diese Mittel zur Signalverteilung (MR) angeschlossen sind, an diesen ersten Multiplexer (M1) und an diese ersten (MA1) und zweiten (MA2) Aktionsmittel, und so angelegt sind, hei lokaler Erfassung einer Signalunterbrechung, an diese ersten (MA1) und zweiten (MA2) Aktionsmittel lokale Zustandsanweisungen zu schicken, so dass sie sich in diesen zweiten Zustand des Einsetzens/Herausziehens begeben.

2. Ausrüstung gemäß Anspruch 1, **dadurch gekennzeichnet, dass** diese Mittel zur Signalsicherung (MIE, MR, MA1, MA2) Folgendes beinhalten:
- erste Kopplungsmittel (MC2), weiche diese ersten Mittel zum Einsetzen/Herausziehen von Signalen (MIE1) an diese ersten (MA1) und zweiten (MA2) Aktionsmittel anschließen, so dass an diese selektiv diese lokalen Zustandsanweisungen übertragen werden,
- zweite Kopplungsmittel (MC1), welche diese ersten (MA1) und zweiten (MA2) Aktionsmittel untereinander verbinden, so dass sie sich zu regenerierende Signale mitteilen können,und
- dritte Kopplungsmittel (MC4), welche diese Verteilungsmittel (MR) mit diesen ersten Mitteln zum Einsetzen/Herausziehen (MIE1) verbinden und mit diesen ersten (MA1) und zweiten (MA2) Aktionsmitteln zwecks Signalaustausch zwischen diesem Terminal (T) und diesen Teilen optischer Faser (F1, F2) via diesen ersten (M1) beziehungsweise diesen zweiten (M2) Multiplexer.

3. Ausrüstung gemäß Anspruch 1 oder 2, **dadurch gekennzeichnet, dass** diese Mittel zur Signalsicherung (MIE, MR, MA1, MA2) so angelegt sind, dass bei lokaler Erfassung einer Übertragungsunterbrechung eines Signals, das eine dritte Wellenlänge aufweist, auf diesem zweiten Teil optischer Faser (F1, F2), gemäß einer vierten Wellenlänge Signale an den ersten Multiplexer (M1) übertragen werden, die von diesem Terminal (T) kommen, so dass dieser sie an den ersten Teil optischer Faser (F1, F2) mitteilt, und an dieses Terminal (T) die für es bestimmten Signale, die von dem ersten Teil optischer Faser (F1, F2) kommen, übertragen werden, wobei diese zweite Wellenlänge (λs) aufgewiesen wird.

4. Ausrüstung gemäß Anspruch 3, **dadurch gekennzeichnet, dass** diese Mittel zur Signalsicherung (MIE, MR, MA1, MA2) zweite Mittel zum Einsetzen/Herausziehen von Signalen (MIE2), welche die dritte Wellenlänge aufweisen, beinhalten, an diese Mittel zur Signalverteilung (MR), an diesen zweiten Multiplexer (M2) und an diese ersten (MA1) und zweiten (MA2) Aktionsmittel angeschlossen sind und so angelegt sind, dass bei lokaler Erfassung einer Übertragungsunterbrechung eines Signals, welches die dritte Wellenlänge aufweist, an diese ersten (MA1) und diese zweiten (MA2) Aktionsmittel lokale Zustandsanweisungen gesandt werden, so dass sie sich in diesen zweiten Zustand des Einsetzens/Herausziehens versetzen.

5. Ausrüstung gemäß Anspruch 4, **dadurch gekennzeichnet, dass** diese Mittel zur Signalsicherung (MIE, MR, MA1, MA2) vierte Kopplungsmittel (MC3) beinhalten, welche diese zweiten Mittel zum Einsetzen/Herausziehen von Signalen (MIE2) an diese ersten (MA1) und zweiten (MA2) Aktionsmittel anschließen, so dass an diese selektiv diese lokalen Zustandsanweisungen übertragen werden.

6. Ausrüstung gemäß einem der Ansprüche 3 bis 5, **dadurch gekennzeichnet, dass** diese dritte Wellenlänge identisch ist mit dieser ersten Wellenlänge (λw).
